# EUROPÄISCHE PATENTSCHRIFT

(11) **EP 1 243 415 B1**
(45) Veröffentlichungstag und Bekanntmachung des Hinweises auf die Patenterteilung: **06.09.2006**
(21) Anmeldenummer: 02004481.4
(22) Anmeldetag: 27.02.2002
(51) Int. Cl.: B41F 7/32, B01D 29/27

(54) **Feuchtmittelsystem für den Offsetdruck**
Damping device for offset printing
Dispositif d'humidification pour l'impression offset

(30) Priorität: 24.03.2001 DE 10114644
(43) Veröffentlichungstag der Anmeldung: 25.09.2002
(73) Patentinhaber: Technotrans AG, 48336 Sassenberg (DE)
(72) Erfinder: Garrido Rodriguez, Maria Jesus, 48226 Sassenberg (DE); Roer, Wilhelm, 59269 Beckum (DE); Peick, Hubert, 59302 Oelde (DE)
(74) Vertreter: TER MEER - STEINMEISTER & PARTNER GbR

(56) Entgegenhaltungen:
- GB-A- 2 263 874
- US-A- 4 874 510

## Beschreibung

Die Erfindung betrifft ein Feuchtmittelsystem für den Bogen- oder den Rollenoffsetdruck, mit einem Feuchtmitteltank, von dem aus Feuchtmittel dem Feuchtwerk der entsprechenden Druckmaschine zugeführt wird und in dem das vom Druckwerk zurückkehrende überschüssige Feuchtmittel gesammelt und aufbereitet wird, und mit einer Filtereinrichtung im Feuchtmittelrücklauf, gemäß dem Oberbegriff des Anspruchs 1

Derartige Feuchtmittelsysteme sind in verschiedenen Ausgestaltungen bekannt, siehe z.B. GB-A-2 263 874. Bei einer weit verbreiteten Ausführungsform befindet sich im Rücklauf vor dem Feuchtmitteltank ein Filterkasten, in dem eine Filtermatte auf einer Lochplatte liegt. Das zurückkehrende Feuchtmittel fällt aus einer Leitung des Rücklaufsystems auf die Filtermatte, durchdringt diese und die Lochplatte und kehrt über geeignete Verbindungen in den Feuchtmitteltank zurück. Bei diesem System erweist es sich als nachteilig, daß das zu filternde Feuchtmittel ständig in dieselbe Position auf der Filtermatte herabfällt. Dies führt dazu, daß das Feuchtmittel die Filtermatte im wesentlichen im Mittelbereich durchdringt, so daß die äußeren Bereiche der Filtermatte nur unzureichend genutzt werden können. Beim Herabfallen des Feuchtmittels auf die Filtermatte kommt es im übrigen zu einem erhöhten Lufteintrag in das Feuchtmittel, so daß dieses zum Aufschäumen neigt. Schwierigkeiten bereitet aus räumlichen Gründen auch zumeist die Anordnung des Filterkastens, der zwar wesentlich kleiner ist als der Feuchtmitteltank, jedoch bei ohnehin beengten Platzverhältnissen nicht leicht unterzubringen ist.

Der Erfindung liegt die Aufgabe zugrunde, ein Feuchtmittelsystem zu schaffen, das im Hinblick auf Wirksamkeit, Bedienung und Wartung verbessert ist.

Die Lösung dieser Aufgabe besteht in der Schaffung eines Feuchtmittelsystems mit den Merkmalen des Anspruchs 1.

Erfindungsgemäß taucht bei dem Feuchtmittelsystem das Ende eines Rücklaufrohres innerhalb des Feuchtmitteltanks in einen Filterbeutel ein, der mit dem Rücklaufrohr verbunden ist.

Am Ende des Rücklaufrohres befindet sich ein Endstück, an dem der Filterbeutel befestigt ist. Im Inneren des Endstücks befindet sich ein Füllstandsmesser, der feststellt, wenn sich das Feuchtmittel zurückstaut. Dies wird in der Regel darauf beruhen, daß die Schmutzbelastung des Filtermaterials einen bestimmten Wert erreicht hat und die Durchlässigkeit des Filtermaterials für das Feuchtmittel entsprechend abgenommen hat. Dies wird zumeist ein Hinweis darauf sein, daß der Filterbeutel ausgewechselt werden muß.

Im übrigen weist das Endstück Überlauföffnungen auf, die bei einem Rückstau das Feuchtmittel unmittelbar in den Filtermitteltank austreten lassen und verhindern, daß sich das Feuchtmittel über weitere Teile des Rücklaufsystems anstaut.

Das Ende des Rücklaufrohres mit dem Filterbeutel befindet sich somit unmittelbar im Feuchtmitteltank. Der zuvor übliche Filterkasten kann vollständig entfallen. Je nach Auslegung wird das Feuchtmittel innerhalb des Filterbeutels leicht gestaut, so daß es im wesentlichen über die Gesamtfläche des Filterbeutels austritt und das Filtermaterial gleichmäßig genutzt wird. Der Lufteintrag wird wesentlich verringert, so daß auch die Neigung des Feuchtmittels zum Aufschäumen weitgehend entfällt. Neben dem Filterkasten können auch die zugehörigen Leitungen, Pumpen etc. entfallen.

Das Filtermaterial kann unterschiedlich sein und entsprechend dem Verwendungszweck ausgewählt werden. Zumeist wird es sich um ein Nonwoven-Produkt aus Polyester handeln, jedoch können auch insoweit unterschiedliche Qualitäten entsprechend den zu erwartetenden Betriebsbedingungen verwendet werden.

Beim Bogenoffsetdruck besteht die Schmutzbelastung des Feuchtmittels in erster Linie aus Puder, weniger aus Papierstrich und Druckfarbe. Demgegenüber spielt beim Rollenoffsetdruck die Feuchtmittelbelastung durch Druckfarbe, gefolgt von Papierstrich eine Rolle. Das Filtermaterial wird zweckmäßig entsprechend der Teilchengröße der Schmutz-Stoffe ausgewählt.

Vorzugsweise hat der Filterbeutel die Form eines flachen Kissens, in dessen eine Hauptfläche einer Einlaßöffnung eingearbeitet ist. Diese Einlaßöffnung kann durch einen Anschlußring eingefaßt sein, der seinerseits eine Form aufweist, die eine rasche Verbindung mit dem Ende des Rücklaufrohres ermöglicht.

So kann der Anschlußring beispielsweise aus einem oberen und einem unteren Ringteil bestehen, die vorspringende Flansche aufweisen und damit das Material am Rand der Öffnung von oben und unten erfassen und einspannen.

Das Endstück am Ende des Rücklaufrohres ist entsprechend der Form des Anschlußringes gestaltet und weist beispielsweise einen nach außen vorspringenden umlaufenden Flansch auf, an dem der Anschlußring mit dem Filterbeutel festgehakt werden kann.

Im folgenden werden bevorzugte Ausführungsbeispiele der Erfindung anhand der beigefügten Zeichnung näher erläutert.
- Fig. 1: ist ein senkrechter Schnitt durch ein Endstück eines Rücklaufrohres mit einem erfindungsgemäßen Filterbeutel;
- Fig. 2: ist eine perspektivische Explosionsdarstellung zu Fig. 1;
- Fig. 3: ist eine perspektivische Darstellung des Filterbeutels im Zusammenhang mit dem Feuchtmitteltank.

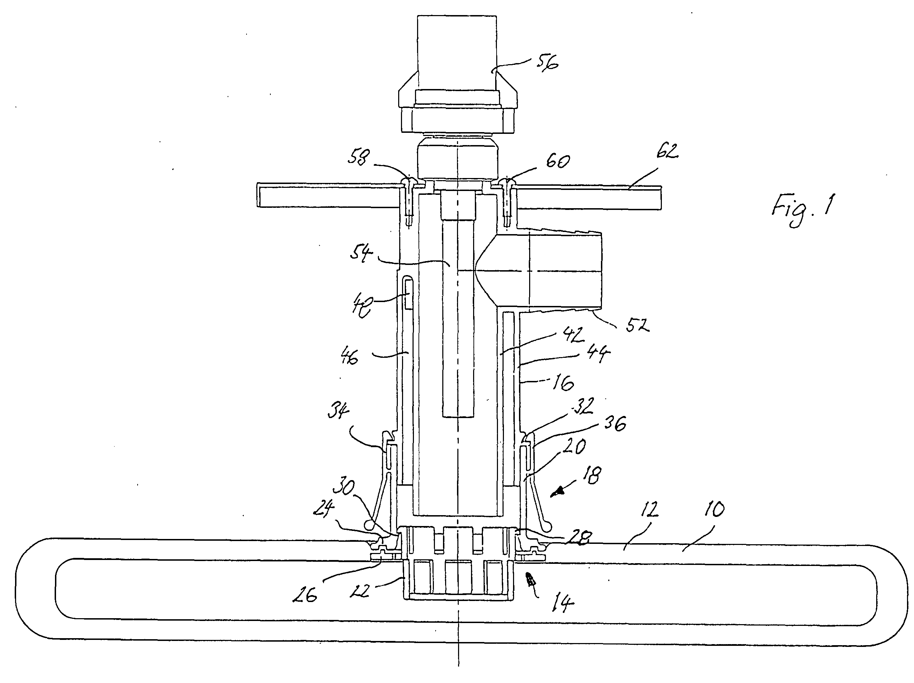

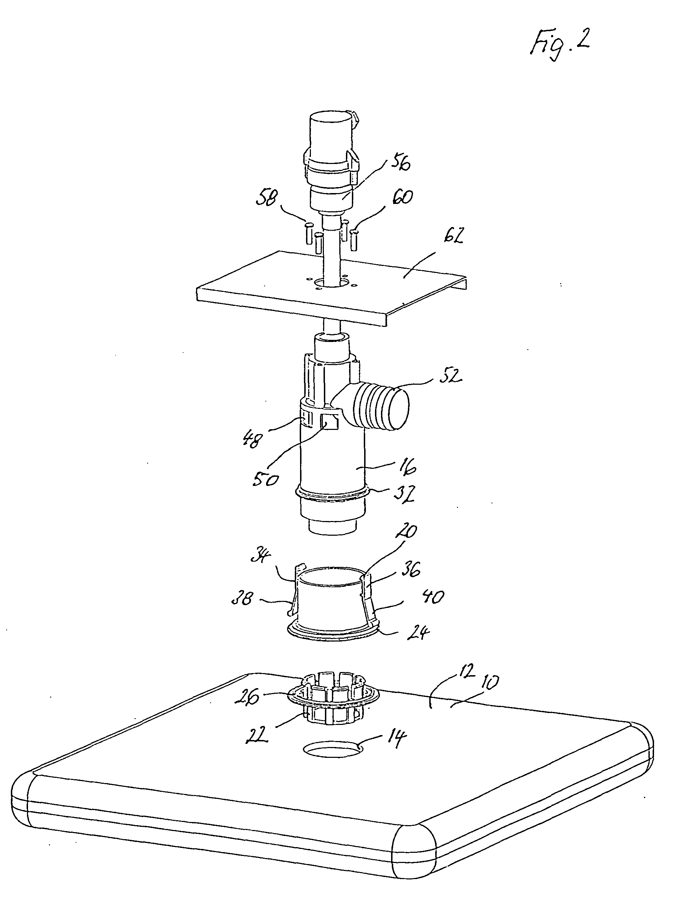

Im folgenden soll zunächst auf die Figuren 1 und 2 Bezug genommen werden. Die Figuren 1 und 2 zeigen im unteren Bereich einen flachen, im wesentlichen rechteckigen, gewissermaßen auch kissenförmigen Filterbeutel 10, der gemäß Fig. 2 in einer seiner Hauptflächen 12 eine kreisförmige Öffnung 14 aufweist. Der Filterbeutel 10 besteht beispielsweise aus einem Nonwoven-Filtermaterial aus Polyester. Im Interesse eines raschen und einfachen Anschlusses des Filterbeutels 10 an ein Endstück 16 eines insgesamt nicht dargestellten Rücklaufrohres, ist die Öffnung 14 des Filterbeutels 10 durch einen Anschlußring 18 eingefaßt.

Wie vor allem aus Fig. 2 hervorgeht, ist der Anschlußring 18 aus zwei Ringteilen 20,22 zusammengesetzt. Die beiden Ringteile 20,22 weisen jeweils einen umlaufenden Flansch 24,26 auf dem äußeren Umfang auf.

In Fig. 1 ist erkennbar, daß der Flansch 26 des unteren Ringteils 22 auf dem gesamten Umfang der Öffnung 14 das Material des Filterbeutels von unten erfaßt, während der Flansch 24 des oberen Ringteils 20 von oben aufgesetzt wird. Das untere Ringteil 22 weist am oberen Rand eine umlaufende, nach außen vorspringende Hakenleiste 28 auf. Das untere Ringteil 22 ist durch achsparallele Schlitze unterbrochen, so daß einzelne Lamellen entstehen, die der Hakenleiste 28 eine entsprechende Elastizität verleihen.

Auf der anderen Seite befindet sich im Inneren des oberen Ringteils 20 am unteren Rand eine nach innen vorspringende, korrespondierende Hakenleiste 30. Wenn das hülsenförmig ausgebildete obere Ringteil 20 auf das untere Ringteil 22 aufgesetzt und nach unten gedrückt wird, verrasten die beiden Hakenleisten 28,30 miteinander, während die beiden Flansche 24,26 das Filtermaterial auf dem Umfang der Öffnung 14 einspannen.

Der aus den beiden Ringteilen 20,22 gebildete Anschlußring 18 ist so an die Form des Endstücks 16 angepaßt, daß ein Filterbeutel 10 mit dem Anschlußring 18 leicht an dem Endstück 16 angebracht und auch wieder von diesem gelöst werden kann. Zu diesem Zweck befindet sich auf dem äußeren Umfang des Endstücks ebenfalls ein nach außen vorspringender Flansch 32. Wenn das Endstück 16 nach unten in das hülsenförmige obere Ringteil 20 eingeschoben wird, trifft der vorspringende Flansch 32 des Endstücks gegen den oberen Rand des oberen Ringteils 20, so daß ein weiteres Eindringen des Endstücks in den Filterbeutel ausgeschlossen ist.

Andererseits befinden sich auf dem äußeren Umfang des oberen Ringteils 20 wenigstens zwei federnde Verbindungshaken 34,36, die in der montierten Stellung, die in Fig. 1 gezeigt ist, den Flansch 32 von oben übergreifen und die Verbindung von Endstück 16 und Filterbeutel 10 auf diese Weise vollenden. Zum Lösen der Verbindungshaken 34,36 sind diese mit Drucktasten 38,40 ausgerüstet. Die Verbindungshaken 34,36 und die Drucktasten 38,40 bilden gemeinsam eine Wippe, die um nicht bezeichnete Verbindungstege kippbar ist. Bei einem Druck auf die Drucktasten 38,40 lösen sich die Verbindungshaken 34,36 von dem Flansch 32.

Das rohrförmige Endstück 16 ist auf einem Teil seiner Länge doppelwandig ausgebildet und umfaßt eine innere Wand 42 und eine äußere Wand 44. Am unteren Ende des Endstücks 16 sind die beiden Wände 42,44 nicht verbunden. Von dem durch die beiden Wände 42,44 gebildeten ringförmigen Zwischenraum 46 besteht über mehrere Öffnungen 48,50 durch die äußere Wand 44 Verbindung nach außen. Diese Öffnungen 48,50 dienen als Überlauf, wie später noch einmal angesprochen werden soll.

Von der Seite her tritt in das Endstück 16 ein Anschlußstutzen 52 ein, der mit einer nicht dargestellten Rücklaufleitung des Feuchtmittelsystems verbunden ist. Der Anschlußstutzen 52 tritt in das Innere des Endstücks 16 innerhalb der inneren Wand 42 ein.

Innerhalb der inneren Wand 42 befindet sich im übrigen ein Füllstandsmesser 54, der in Verbindung mit einer Meß- und Steuerelektronik 56 steht, die auf dem oberen Ende des Endstücks 16 angebracht ist, und einen etwaigen Flüssigkeitsfüllstand innerhalb des Endstücks registriert und entsprechende Steuersignale abgibt.

Bei normalem Betrieb läuft ständig überschüssiges Feuchtmittel von der Druckschmaschine über eine nicht dargestellte Leitung und den Anschlußstutzen 52 in das Endstück 16 hinein und von hier aus durch die Öffnung 14 in den Filterbeutel 10. Der Filterbeutel 10 befindet sich innerhalb des Feuchtmitteltanks und hier unterhalb des Wasserspiegels. Der Filterbeutel 10 ist also ständig vollständig mit Feuchtmittel gefüllt, und dieses Feuchtmittel dringt langsam nach allen Seiten durch das Filtermaterial nach außen in das im Tank enthaltene Feuchtmittel.

Wenn die zulaufende Feuchtmittelmenge zu groß ist oder wenn die durch den Filterbeutel 10 ablaufende Feuchtmittelmenge zu klein ist, etwa weil der Filterbeutel verschmutzt ist, staut sich das Feuchtmittel innerhalb des Endstücks 16 auf. Dabei erreicht es den Füllstandsmesser 54, so daß die Meß- und Steuerelektronik 56 geeignete Signale abgeben kann, nach denen etwa der Filterbeutel 10 gewechselt oder die Feuchtmittelzufuhr gedrosselt werden kann. Falls diese Maßnahmen nicht rechtzeitig getroffen werden und das Feuchtmittel in dem Endstück 16 bis zu den Öffnungen 48,50 ansteigt, kann es ungefiltert in den Feuchtmitteltank überlaufen.

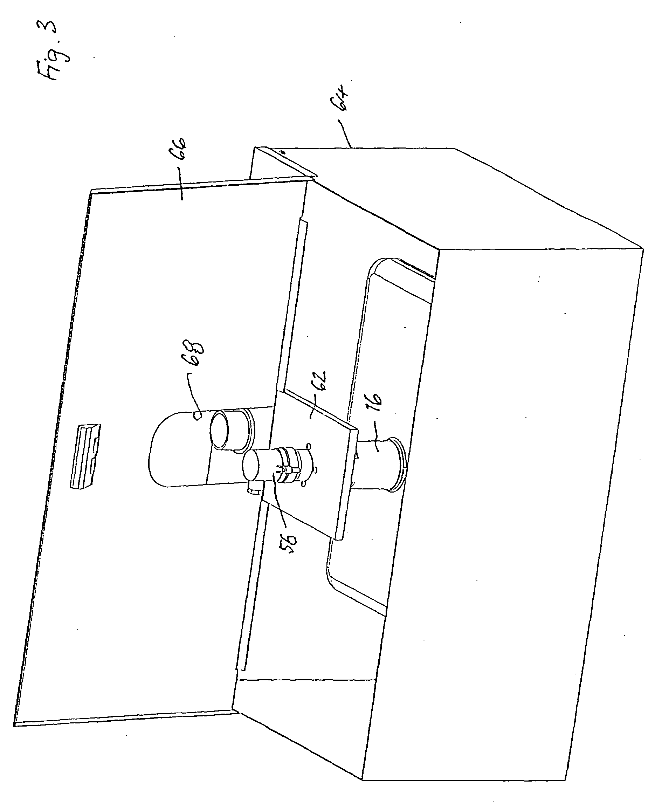

Das Endstück 16 ist an seinem oberen Ende mit Hilfe von Schrauben 58,60 an einem Deckelteil 62 befestigt, das auf einen Feuchtmitteltank aufgelegt werden kann. Ein derartiger Feuchtmitteltank 64 ist in Fig. 3 gezeigt. Der Feuchtmitteltank ist kastenförmig und besteht beispielsweise aus nichtrostendem Stahl. Er besitzt einen Klappdeckel 66, der gemäß Fig. 3 geöffnet ist. Der Klappdeckel 66 weist einen Ausschnitt 68 auf, der durch das Deckelteil 62 gemäß Fig. 1 und 2 unterlegt ist, das seinerseits im oberen Bereich des Feuchtmitteltanks 44 in geeigneter Weise aufgehängt ist. Fig. 3 zeigt im Zusammenhang mit dem Deckelteil 62 den Filterbeutel 10, den Anschlußring 18 und die Meß- und Steuerelektronik 56.

## Patentansprüche

1. Feuchtmittelsystem für den Bogen- oder Rollenoffsetdruck, mit einem Feuchtmitteltank (64), von dem aus Feuchtmittel dem Feuchtwerk der entsprechenden Druckmaschine zugeführt wird und in dem das vom Druckwerk durch ein Rücklaufrohr zurückkehrende überschüssige Feuchtmittel gesammelt und aufbereitet wird, und mit einer Filtereinrichtung im Feuchtmittelrücklauf, wobei am Ende des Rücklaufrohres ein Endstück (16) vorgesehen ist, das in einen Filterbeutel (10) eintaucht und mit diesem verbunden ist, und das Endstück (16) des Rücklaufrohres mit dem Filterbeutel (10) unmittelbar im Feuchtmitteltank (64) liegt, **dadurch gekennzeichnet, daß** in dem Endstück (16) ein Füllstandsmesser (54) vorgesehen ist und daß das Endstück (16) Überlauföffnungen (48,50) aufweist, die bei einem Rückstau des Feuchtmittels den unmittelbaren Austritt des Feuchtmittels in den Feuchtmitteltank gestatten.

2. Feuchtmittelsystem nach Anspruch 1, **dadurch gekennzeichnet, daß** der Filterbeutel (10) die Form eines flachen Kissens aufweist.

3. Feuchtmittelsystem nach Anspruch 2, **dadurch gekennzeichnet, daß** in einer der beiden Hauptflächen (12) des Kissens eine Einlaßöffnung (14) vorgesehen ist.

4. Feuchtmittelsystem nach Anspruch 3, **dadurch gekennzeichnet, daß** die Einlaßöffnung (14) durch einen Anschlußring (18) eingefaßt ist, der mit dem Ende des Rücklaufrohres verbindbar ist.

5. Feuchtmittelsystem nach Anspruch 4, **dadurch gekennzeichnet, daß** der Anschlußring (18) aus einem oberen und einem unteren Ringteil (20,22) besteht und daß die beiden Ringteile umlaufende, vorspringende Flansche (24,26) auf weisen, die das Material des Filterbeutels (10) von innen und außen erfassen und einspannen.

6. Feuchtmittelsystem nach Anspruch 5, **dadurch gekennzeichnet, daß** das untere Ringteil (22) an seinem oberen Rand eine nach außen vorspringende, umlaufende Hakenleiste (28) aufweist und daß im Inneren des hülsenförmigen oberen Ringteils (20) am unteren Rand eine umlaufende, nach innen vorspringende Hakenleiste (30) vorgesehen ist.

7. Feuchtmittelsystem nach einem der vorhergehenden Ansprüche, **dadurch gekennzeichnet, daß** das Endstück (16) mit dem Anschlußring (18) des Filterbeutels (10) verbunden ist.

8. Feuchtmittelsystem nach Anspruch 7, **dadurch gekennzeichnet, daß** das Endstück (16) einen vorspringenden Flansch (32) auf dem Umfang aufweist und daß an dem oberen Ringteil (20) Verbindungshaken (34,36) vorgesehen sind, die den Flansch von außen übergreifen.

9. Feuchtmittelsystem nach Anspruch 7 oder 8, **dadurch gekennzeichnet, daß** das Endstück (16) im unteren Bereich doppelwandig ausgebildet ist und daß die Überlauföffnungen (48,50) in der äußeren Wand (44) vorgesehen sind.

10. Feuchtmittelsystem nach einem der Ansprüche 7 bis 9, **dadurch gekennzeichnet, daß** das Endstück (16) einen seitlich einmündenden Einlaufstützen (52) zur Verbindung mit dem übrigen Rücklaufrohr aufweist.

11. Feuchtmittelsystem nach einem der Ansprüche 7 bis 10, **dadurch gekennzeichnet, daß** in dem Endstück (16) ein Füllstandmesser (54) vorgesehen ist.

12. Feuchtmittelsystem nach Anspruch 11, **dadurch gekennzeichnet, daß** eine Meß- und Steuerelektronik (56) des Füllstandsmessers (54) im oberen Endbereich des Endstücks (16) oberhalb der Einmündung des Einlaufstutzens (52) vorgesehen ist.

## Claims

1. Dampener system for sheet-fed or web offset printing, with a dampener tank (64) from which dampener is fed to the dampening unit of the corresponding printing machine and in which the excess dampener returning from the printing unit through a return tube is collected and treated, and with a filter device in the dampener return, wherein an end piece (16) is provided at the end of the return tube, which piece dips into a filter bag (10) and is connected to this, and the end piece (16) of the return tube with the filter bag (10) lies directly in the dampener tank (64), **characterised in that** a level meter (54) is provided in the end piece (16), and that the end piece (16) comprises overflow openings (48, 50) which, should the dampener dam up, enable the dampener to escape directly into the dampener tank.

2. Dampener system according to Claim 1, **characterised in that** the filter bag (10) is in the form of a flat pillow.

3. Dampener system according to Claim 2, **characterised in that** an inlet opening (14) is provided in one of the two main faces (12) of the pillow.

4. Dampener system according to Claim 3, **characterised in that** the inlet opening (14) is enclosed by a connection ring (18) which can be connected to the end of the return tube.

5. Dampener system according to Claim 4, **characterised in that** the connection ring (18) consists of an upper and a lower ring part (20, 22), and that the two ring parts comprise all-round, projecting flanges (24, 26) which engage and clamp the material of the filter bag (10) from inside and outside.

6. Dampener system according to Claim 5, **characterised in that** the lower ring part (22) comprises an outward projecting, all-round hooked strip (28) at its upper edge, and that an all-round, inward projecting hooked strip (30) is provided in the interior of the sleeve-shaped upper ring part (20) at the lower edge.

7. Dampener system according to any one of the preceding Claims, **characterised in that** the end piece (16) is connected to the connection ring (18) of the filter bag (10).

8. Dampener system according to Claim 7, **characterised in that** the end piece (16) comprises a projecting flange (32) at the circumference, and that connecting hooks (34, 36) are provided at the upper ring part (20), which hooks engage over the flange from outside.

9. Dampener system according to Claim 7 or 8, **characterised in that** the end piece (16) is of double-walled formation in the lower region, and that the overflow openings (48, 50) are provided in the outer wall (44).

10. Dampened system according to any one of Claims 7 to 9, **characterised in that** the end piece (16) comprises an intake branch (52), which leads in at the side, for connection to the rest of the return tube.

11. Dampener system according to any one of Claims 7 to 10, **characterised in that** a level meter (54) is provided in the end piece (16).

12. Dampener system according to Claim 11, **characterised in that** an electronic measuring and control system (56) of the level meter (54) is provided in the upper end region of the end piece (16) above the mouth of the intake branch (52).

## Revendications

1. Système de mouillage pour l'impression offset de feuilles ou de papier sans fin, comportant un réservoir de produit de mouillage (64) depuis lequel un produit de mouillage est amené à l'unité de mouillage de la machine à imprimer correspondante et dans lequel on recueille et on traite le produit de mouillage excédentaire retournant par un tube de retour depuis l'unité d'impression, et comportant un dispositif de filtrage dans le retour de produit de mouillage, à l'extrémité du tube de retour étant prévu un embout (16) qui plonge dans un sac filtrant (10) et est relié à celui-ci, et l'embout (16) du tube de retour se trouvant avec le sac filtrant (10) directement dans le réservoir de produit de mouillage (64), **caractérisé en ce que** dans l'embout (16) est prévu un dispositif de mesure de niveau (54) et **en ce que** l'embout (16) présente des orifices de trop-plein (48, 50) qui, dans le cas d'une retenue du produit de mouillage, autorisent la sortie directe du produit de mouillage dans le réservoir de produit de mouillage.

2. Système de mouillage selon la revendication 1, **caractérisé en ce que** le sac filtrant (10) a la forme d'un coussin plat.

3. Système de mouillage selon la revendication 2, **caractérisé en ce que** dans l'une des deux surfaces principales (12) du coussin est prévue une ouverture d'entrée (14).

4. Système de mouillage selon la revendication 3, **caractérisé en ce que** l'ouverture d'entrée (14) est entourée par une bague de raccordement (18) qui peut être reliée à l'extrémité du tube de retour.

5. Système de mouillage selon la revendication 4, **caractérisé en ce que** la bague de raccordement (18) est constituée d'une partie de bague supérieure et d'une partie de bague inférieure (20, 22), et **en ce que** les deux parties de bague présentent des brides (24, 26) saillantes, périphériques, qui saisissent et tendent le matériau du sac filtrant (10) depuis l'intérieur et l'extérieur.

6. Système de mouillage selon la revendication 5, **caractérisé en ce que** la partie de bague inférieure (22) présente, sur son bord supérieur, une baguette à crochets (28) périphérique, faisant saillie vers l'extérieur, et **en ce qu'**à l'intérieur de la partie de bague supérieure (20) en forme de douille il est prévu sur le bord inférieur une baguette à crochets (30) périphérique, faisant saillie vers l'intérieur.

7. Système de mouillage selon l'une des revendications précédentes, **caractérisé en ce que** l'embout (16) est relié à la bague de raccordement (18) du sac filtrant (10).

8. Système de mouillage selon la revendication 7, **caractérisé en ce que** l'embout (16) comporte une bride (32) saillante sur son pourtour et **en ce que** sur la partie de bague supérieure (20) sont prévus des crochets de liaison (34, 36) qui passent de l'extérieur sur la bride.

9. Système de mouillage selon la revendication 7 ou 8, **caractérisé en ce que** l'embout (16) est réalisé à double paroi dans la zone inférieure et **en ce que** les orifices de trop-plein (48, 50) sont prévus dans la paroi (44) extérieure.

10. Système de mouillage selon l'une des revendications 7 à 9, **caractérisé en ce que** l'embout (16) comporte une tubulure d'entrée (52) débouchant latéralement pour la liaison avec le reste du tube de retour.

11. Système de mouillage selon l'une des revendications 7 à 10, **caractérisé en ce que** dans l'embout (16) est prévu un dispositif de mesure de niveau (54).

12. Système de mouillage selon la revendication 11, **caractérisé en ce qu'**une électronique de mesure et de commande (56) du dispositif de mesure de niveau (54) est prévue dans la zone d'extrémité supérieure de l'embout (16), au-dessus de l'embouchure de la tubulure d'entrée (52).
